# EUROPÄISCHE PATENTSCHRIFT

(11) **EP 1 899 133 B1**
(45) Veröffentlichungstag und Bekanntmachung des Hinweises auf die Patenterteilung: **29.02.2012**
(21) Anmeldenummer: 05826540.6
(22) Anmeldetag: 02.01.2006
(51) Int. Cl.: B29C 44/12

(54) **VERFAHREN ZUM HERSTELLEN VON SCHWAMMGUMMI-FORMTEILEN**
METHOD FOR PRODUCING FOAM RUBBER MOULDED PARTS
PROCEDE DE FABRICATION DE PIECES MOULEES EN CAOUTCHOUC POREUX

(30) Priorität: 07.07.2005 DE 102005031907
(43) Veröffentlichungstag der Anmeldung: 19.03.2008
(73) Patentinhaber: BOSIG GmbH, 73333 Gingen a. d. Fils (DE)
(72) Erfinder: SCHMID, Oliver, 73333 Gingen/Fils (DE)
(74) Vertreter: Konle, Tilmar
(86) Internationale Anmeldenummer: PCT/EP2005/012846
(87) Internationale Veröffentlichungsnummer: WO 2007/006341

(56) Entgegenhaltungen:
- FR-A- 2 084 293
- US-A- 3 725 968
- US-B1- 6 258 868

## Beschreibung

Die Erfindung bezieht sich auf ein Verfahren zum Herstellen von Schwammgummi-Formteilen gemäß dem Oberbegriff des Anspruchs 1. Ein derartiges Verfahren ist aus dem DE 32 18 254 C1 bekannt.

Formteile aus Schwammgummi werden bekanntlich aus dem Vollen aus Schwammgummiblöcken ausgefräst, ausgeschnitten und/oder gestanzt.

Bei Schwammgummi handelt es sich um porigen Gummi, der durch Zumischen von Treibmittel zu einer Gummimasse aus natürlichem oder synthetischem Kautschuk mit anschliessendem Vulkanisieren gebildet wird. Formteile aus Schwammgummi haben vielfältige Eigenschaften, welche ihren industriellen Einsatz wertvoll machen. Schwammgummi ist elastisch, flexibel, fest, abriebfest, wasseraufnahmefähig, in beliebigen Formen und Farben herstellbar, zuverlässig und hochwertig. Beispielsweise können Kugelformen mit verschiedenen Durchmessern als Rohrreinigungskugeln in Betonpumpen, Schankanlagen, Melkanlagen und Kraftwerken verwendet werden. Einsatzbeispiele für Zuschnitte aus Schwammgummi sind Reibebretter, Reinigungsmaschinen, Etikettiermaschinen, Auflagen für Laufbänder und Poliermaschinen, Volumenpumpen oder Hebegeräte.

Bei der Herstellung von derartigen Formteilen durch Fräsen, Ausschneiden und/oder Stanzen aus Schwammgummiblöcken fallen indessen zum Teil erhebliche Schwammgummiabfälle an, insbesondere bei kugelförmigen oder zylinderförmigen Formteilen.

Die Aufgabe der Erfindung besteht darin, ein Verfahren zu schaffen, welches die Herstellung von Schwammgummi-Formteilen praktische ohne Schwammgummiabfälle ermöglicht.

Diese Aufgabe wird erfindungsgemäss durch die kennzeichnenden Merkmale des Anspruchs 1 gelöst.

Das erfindungsgemässe Verfahren geht von der Überlegung aus, dass es bei vielen Anwendungen von Schwammgummi-Formteilen genügt, wenn nur die Aussenschicht des Formteils aus Schwammgummi besteht. Hierzu wird dem erfindungsgemässen Verfahren gemäß Anspruch 1 verwendet.

Mit diesem Giessverfahren lassen sich nahezu beliebig geformte Formteile mit einer Schwammgummioberfläche ohne nennenswerte Schwammgummiabfälle herstellen. Der Innenkern des hergestellten Formteils ist hohl ausgebildet, um das Gewicht des Formteils zu verringern. Da es bei vielen Anwendungen von Schwammgummi-Formteilen nur auf deren Schwammgummi-Oberfläche ankommt, beispielsweise bei Schwammgummibällen, die zum Reinigen von Rohren verwendet werden, erfüllen die erfindungsgemäss hergestellten Formkörper denselben Zweck wie formgleiche, aus Schwammgummiblöcken gefräste, ausgeschnittene und/oder ausgestanzte Formteile, die vollständig, also auch in ihrem Inneren, aus Schwammgummi bestehen.

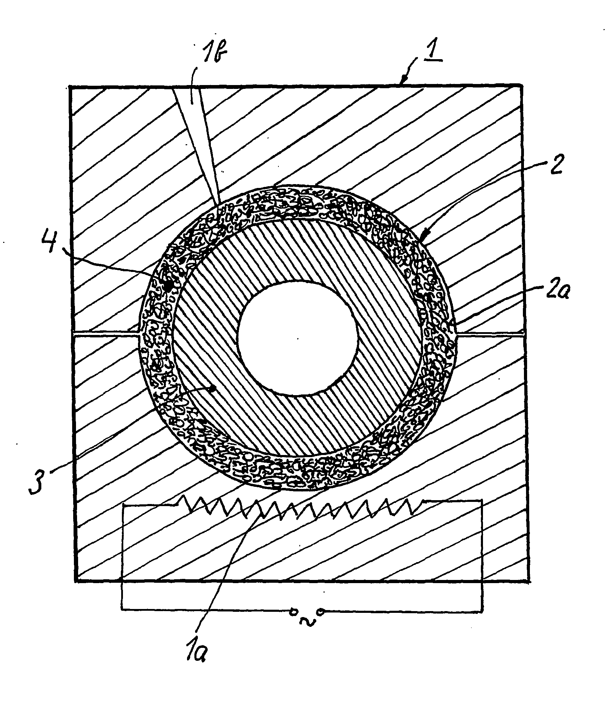

Die Erfindung wird nachstehend an Hand eines in den Zeichnungen dargestellten Ausführungsbeispiels näher erläutert. Die einzige Figur zeigt einen schematischen Querschnitt durch eine Giessform mit einem darin ausgeformten Schwammgummiball.

Die in der Figur schematisch gezeigte Giessform 1 ist im Beispielsfalle zweiteilig ausgebildet und kann in geeigneter Weise, beispielsweise über eingelegte Heizdrähte 1a elektrisch beheizt werden. Alternativ kann die gefüllte Giessform 1 in einen Heizschrank oder einen Ofen zum Erwärmen auf eine gewünschte Temperatur gelegt werden. Näheres zu der gewünschten Temperatur wird nachstehend erläutert. Die zweiteilige Giessform 1 umschliesst einen kugelförmigen Hohlraum 2, in welchem ein hohler Innenkern 3 angeordnet ist. Zwischen dem Innenkern 3 und der Innenwand 2a des Hohlraums 2 erstreckt sich ein schalenförmiger Zwischenraum 4, in welchen eine Gussmasse über einen Giessspalt 1b der Giessform eingefüllt wird. Nach der vollständigen Füllung des Zwischenraums 4 wird der Giessspalt 1b verschlossen.

Die Gussmasse besteht aus flüssiger Gummimasse, nämlich aus Naturkautschuk oder synthetischem Kautschuk und einem darin eingemischten Treibmittel, beispielsweise Kohlendioxid CO₂. Es können auch Stickstoff abspaltende Treibmittel wie beispielsweise Sulfohydrazide verwendet werden. Der Innenkern 2 besteht aus Gummi oder aus einem thermoplastischen Kunststoff wie beispielsweise Polyvinylchlorid PVC, oder aus einem Elastomer oder aus einem Schaumstoff, wie beispielsweise Polyurethan Schaumstoff.

Nach dem Verschliessen des Giessspaltes 1b wird die Giessform 1 auf eine Temperatur beheizt, bei welcher zum einen das Treibmittel in ein Treibgas umgewandelt wird, das sich in der Gummimasse löst und damit die Gummimasse aufschäumt. Zum anderen wird die Temperatur der Giessform derart gewählt bzw. gesteuert, dass die schaumförmige Gummimasse zu einem porigen Gummi vulkanisiert wird. Im Ergebnis wird um den Innenkern 2 eine offenporig Aussenschicht aus Schaumgummi gebildet. Nach vollständiger Vulkanisierung der schaumförmigen Gummimasse wird der gebildete Formkörper aus der Giessform 1 entfernt. Die an der Aussenschicht gebildete Aussenhaut wird gegebenenfalls entfernt, beispielsweise abgeschliffen oder abgewogen.

## Patentansprüche

1. Verfahren zum Herstellen von Schwammgummibällen zum Reinigen von Rohren, bei dem in einer Gießform (1) mit einem auf die Außenabmessungen des Formteils abgestimmten kugelförmigen Hohlraum (2) eine Mischung (5) aus einer Gummimasse und einem Treibmittel eingefüllt wird, welches beim Erwärmen der Gießform (1) in ein Treibgas umgewandelt wird, welches die Gummimasse aufschäumt, und bei dem die schaumförmige Gummimasse zu porigem Schwammgummi mit einer Außenhaut vulkanisiert und anschließend aus der Gießform (1) entfernt wird, **dadurch gekennzeichnet, dass** in dem kugelförmigen Hohlraum (2) der Gießform (1) ein Innenkern (3) aus Gummi oder Kunststoffmaterial derart positioniert wird, dass ein schalenförmiger Zwischenraum (4) zwischen dem Innenkern (3) und der Innenwand (2a) des kugelförmigen Hohlraums (2) der Gießform (1) gebildet wird, dass in den schalenförmigen Zwischenraum (4) die Gummimasse und das Treibmittel eingefüllt werden, worauf in dem schalenförmigen Zwischenraum (4) die Gummimasse aufgeschäumt wird, dass die entstandene schaumförmige Gummimasse zu porigem Schwammgummi vulkanisiert wird, und dass ein hohl ausgebildeter Innenkern (3) verwendet wird, um das Gewicht des fertigen Schwammgummiballs zu verringern.

2. Verfahren nach Anspruch 1, **dadurch gekennzeichnet, dass** als Treibmittel Kohlendioxid (CO₂) vorgesehen ist.

3. Verfahren nach Anspruch 1, **dadurch gekennzeichnet, dass** ein Stickstoff abspaltendes Treibmittel, beispielsweise Sulfohydrazide, verwendet wird.

4. Verfahren nach einem der Ansprüche 1 bis 3, **dadurch gekennzeichnet, dass** als Gummimasse natürlicher oder synthetischer Kautschuk verwendet wird.

5. Verfahren nach einem der Ansprüche 1 bis 4, **dadurch gekennzeichnet, dass** als Material für den hohlen Innenkern (3) ein Elastomer, beispielsweise Polyurethan, verwendet wird.

6. Verfahren nach einem der Ansprüche 1 bis 4, **dadurch gekennzeichnet, dass** als Kunststoffmaterial für den hohlen Innenkern (3) ein thermoplastischer Kunststoff, beispielsweise Polyvinylchlorid, verwendet wird.

7. Verfahren nach einem der Ansprüche 1 bis 4, **dadurch gekennzeichnet, dass** als Kunststoffmaterial für den hohlen Innenkern (3) ein Schaumstoff, beispielsweise Polyurethan-Schaumstoff, verwendet wird.

## Claims

1. A method of producing sponge rubber balls for cleaning of pipes, in which a mould (1) with a ball-shaped cavity (2) being matched with the outer dimensions of the moulded part is filled with a mixture (5) of a rubber material and a blowing agent which, on heating the mould (1), is converted into a blowing gas, and in which the foam-like rubber material is formed to porous sponge rubber having a vulcanized outer skin and is then removed from the mould (1), **characterized in that** an inner core (3) of rubber or plastic material is positioned in the ball-shaped cavity (2) of the mould (1) such that a shell-shaped intermediate space (4) is formed between the inner core (3) and the inner wall (2a) of the ball-shaped cavity (2) of the mould (1), that the rubber material and the blowing agent are filled in the shell-shaped intermediate space (4), whereupon the rubber material is foamed in the shell-shaped intermediate space (4), that the produced foam-like rubber material is vulcanized to form porous sponge rubber, and that a hollow inner core (3) is used to reduce the weight of the finished sponge rubber ball.

2. Method according to claim 1, **characterized in that** carbon dioxide (CO2) is provided as the blowing agent.

3. Method according to claim 1, **characterized in that** a nitrogen-releasing blowing agent, for example sulphohydrazide, is used.

4. Method according to one of claims 1 to 3, **characterized in that** natural or synthetic rubber is used as the rubber material.

5. Method according to one of claims 1 to 4, **characterized in that** an elastomer, for example polyurethane, is used as the material for the hollow inner-core (3).

6. Method according to one of claims 1 to 4, **characterized in that** a thermoplastic material, for example polyvinyl chloride, is used as the plastic material for the hollow inner-core (3).

7. Method according to one of claims 1 to 4, **characterized in that** a foam material, for example polyurethane foam, is used as the plastic material for the hollow inner-core (3).

## Revendications

1. Procédé de fabrication de balles en caoutchouc spongieux pour le nettoyage de tubes, au cours duquel on verse une masse de caoutchouc et une agent soufflant dans un moule (1) comportant une cavité sphérique (2) adaptée aux dimensions extérieures de la pièce moulée, la dite l'agent soufflant qui se transforme, lorsque l'on chauffe le moule (1), en un gaz de soufflage qui fait mousser la masse de caoutchouc, et au cours duquel la masse de caoutchouc sous forme de mousse est vulcanisée pour obtenir un caoutchouc spongieux recouvert d'une peau avant d'être retirée du moule (1), **caractérisé en ce qu'**un noyau interne (3) en caoutchouc ou en matière synthétique est placé dans la cavité sphérique (2) du moule (1) de manière à former un interstice en coquille (4) entre le noyau interne (3) et la paroi interne (2a) de la cavité sphérique (2) du moule (1), **en ce que** la masse de caoutchouc et l'agent soufflant sont versés dans l'interstice en coquille (4), ce qui entraîne un moussage de la masse de caoutchouc dans l'interstice en coquille (4), **en ce que** la masse de caoutchouc en forme de mousse ainsi apparue est vulcanisée pour obtenir un caoutchouc spongieux, et **en ce qu'**un noyau interne creux (3) est utilisé afin de réduire le poids de la balle en caoutchouc spongieux terminée.

2. Procédé selon la revendication 1, **caractérisé en ce que** l'agent soufflant prévu est du dioxyde de carbone (CO₂).

3. Procédé selon la revendication 1, **caractérisé en ce qu'**un agent soufflant décomposant l'azote, par exemple un sulfohydrazide, est utilisé.

4. Procédé selon l'une des revendications 1 à 3, **caractérisé en ce que** la masse de caoutchouc utilisée est un caoutchouc naturel ou synthétique.

5. Procédé selon l'une des revendications 1 à 4, **caractérisé en ce que** le matériau utilisé pour le noyau interne creux (3) est un élastomère, par exemple du polyuréthane.

6. Procédé selon l'une des revendications 1 à 4, **caractérisé en ce que** la matière synthétique utilisée pour le noyau interne creux (3) est une matière synthétique thermoplastique, par exemple du polychlorure de vinyle.

7. Procédé selon l'une des revendications 1 à 4, **caractérisé en ce que** la matière synthétique utilisée pour le noyau interne creux (3) est une mousse, par exemple de la mousse de polyuréthane.
